# EUROPEAN PATENT APPLICATION

(11) **EP 4 819 747 A1**
(43) Date of publication of application: **07.10.2026**
(21) Application number: 23959744.6
(22) Date of filing: 28.11.2023
(51) Int. Cl.: H04W 74/08

(54) **COMMUNICATION METHOD, TERMINAL, AND STORAGE MEDIUM**

(71) Applicant: Beijing Xiaomi Mobile Software Co., Ltd., Beijing 100085 (CN)
(72) Inventor: LI, Yanhua, Beijing 100085 (CN); LIU, Xiaofei, Beijing 100085 (CN); QIAO, Xuemei, Beijing 100085 (CN)
(74) Representative: Dehns
(86) International application number: PCT/CN2023/134856
(87) International publication number: WO 2025/111821

(57) **Abstract**

In the embodiments of the present disclosure are a communication method, a terminal, and a storage medium. The method is executed by a terminal, and comprises: on the basis of a configuration result of a random access channel (RACH) resource, determining the characteristics of random access to be executed, wherein the RACH resource comprises at least one of the following: a two-step random access resource, and a four-step random access resource. The communication mechanism of the technical solution in the embodiments of the present disclosure can be adapted to a newly introduced terminal type.

## Description

### TECHNICAL FIELD

The present disclosure relates to the field of communication technology, and specifically to a communication method, a terminal, and a storage medium.

### BACKGROUND

In the field of communication technology, a new type of terminal known as a reduced-capability (RedCap) UE, or simply an NR-lite UE or Redcap UE, has been proposed. An enhanced reduced capability (eRedcap) UE has also been introduced, in which the bandwidth is limited to 5 MHz.

### SUMMARY

After the introduction of different types of terminals, the communication mechanism needs to be adjusted.

The embodiments of the present disclosure provide a communication method, a terminal, and a storage medium.

According to a first aspect of the embodiments of the present disclosure, a communication method is provided, performed by a first type terminal, including: determining, based on a configuration result of a random access channel (RACH) resource, a feature for performing a random access, in which the RACH resource includes at least one of: a 2-step random access resource; or a 4-step random access resource.

According to a second aspect of the embodiments of the present disclosure, a terminal is provided, including: a processing module, configured to determine, based on a configuration result of an RACH resource, a feature for performing a random access, in which the RACH resource includes at least one of: a 2-step random access resource; or a 4-step random access resource.

According to a third aspect of the embodiments of the present disclosure, a terminal is provided, including: a memory including executable instructions; one or more processors, in which the executable instructions, when executed by the one or more processors, cause the terminal to perform the communication method according to any one of the embodiments of the present disclosure.

According to a fourth aspect of the embodiments of the present disclosure, a storage medium for storing instructions is provided. When the instructions are executed on a communication device, the communication device is caused to perform the communication method in the first aspect.

The communication mechanism of the technical solution provided by the embodiments of the present disclosure may adapt to a newly introduced type of terminal.

It should be understood that an above general description and a following detailed description are exemplary and explanatory only, and do not limit the embodiments of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the embodiments of the present disclosure.
FIG. 1a is a schematic diagram illustrating an architecture of a communication system according to an embodiment.
FIG. 2a is a flowchart illustrating a communication method according to an embodiment.
FIG. 3a is a flowchart illustrating a communication method according to an embodiment.
FIG. 3b is a flowchart illustrating a communication method according to an embodiment.
FIG. 4a is a block diagram illustrating a terminal according to an embodiment.
FIG. 4b is a block diagram illustrating a network device according to an embodiment.
FIG. 5a is a block diagram illustrating a UE according to an embodiment.
FIG. 5b is a block diagram illustrating a communication device according to an embodiment.

### DETAILED DESCRIPTION

The embodiments of the present disclosure provide a communication method, a terminal, and a storage medium.

According to a first aspect, the embodiments of the present disclosure provide a communication method, performed by a first type terminal, including: determining, based on a configuration result of a random access channel (RACH) resource, a feature for performing a random access, in which the RACH resource includes at least one of: a 2-step random access resource; or a 4-step random access resource.

In the above embodiments, since the feature for performing a random access may be clearly determined based on the configuration result of the RACH resource, the reasonable subsequent resource selection may be performed based on the feature, thus improving the communication reliability and the communication efficiency.

In some embodiments in combination with the above first aspect, in some embodiments, determining, based on the configuration result of the RACH resource, the feature for performing the random access includes: determining, by a radio resource control (RRC) layer of the first type terminal, the feature based on the configuration result.

In the above embodiments, determining the feature based on the configuration result may be implemented at the RRC layer of the terminal.

In some embodiments in combination with the above first aspect, in some embodiments, the method further includes: sending, by the RRC layer, first information to a medium access control (MAC) layer of the first type terminal, in which the first information indicates the feature.

In the above embodiments, the RRC layer may send the feature to the MAC layer via the first information.

In some embodiments in combination with the above first aspect, in some embodiments, determining, based on the configuration result of the RACH resource, the feature for performing the random access includes at least one of: determining that a 4-step random access resource configured for the first type terminal or a first feature is a resource for the random access, determining that a 2-step random access resource configured for a second type terminal or a second feature is the resource for the random access, and determining that the feature includes the first feature and the second feature; determining that a 4-step random access resource configured for the first type terminal or a first feature is a resource for the random access, determining that a 2-step random access resource configured for a second type terminal or a second feature is the resource for the random access, and determining that the feature is the second feature; or determining that a 4-step random access resource configured for the first type terminal or a first feature is a resource for the random access, determining that a 2-step random access resource configured for a second type terminal or a second feature is the resource for the random access, and determining that the feature is the first feature or the second feature.

In the above embodiments, when both the 4-step random access resource configured for the first type terminal or the first feature and the 2-step random access resource configured for the second type terminal or the second feature are resources for the random access, it may be clearly determined that the feature is the first feature and the second feature, or either the first feature or the second feature, allowing for greater flexibility in the determining process.

In some embodiments in combination with the above first aspect, in some embodiments, determining that the feature is the first feature or the second feature includes at least one of: determining, based on a measured value of a reference signal, that the feature is the first feature or the second feature; or determining, based on a priority of the first feature and a priority of the second feature, that the feature is the first feature or the second feature.

In the above embodiments, it may be determined that the feature is the first feature or the second feature based on the measured value of the reference signal or the priority of the feature.

In some embodiments in combination with the above first aspect, in some embodiments, determining, based on the configuration result of the RACH resource, the feature for performing the random access includes at least one of: determining that a 4-step random access resource not configured for the first type terminal or a first feature is used for early indication (EI), determining that a random access resource configured for a second type terminal or a second feature is used for the EI, and determining that the feature is the second feature; determining that a 4-step random access resource configured for the first type terminal or a first feature is used for EI, determining that a 4-step random access resource configured for a second type terminal or a second feature is used for the EI, and determining that the feature is the first feature; or determining that only a 4-step random access resource configured for the first type terminal or a first feature is used for EI, and determining that the feature is the first feature.

In the above embodiments, whether the feature is the first feature or the second feature may be determined based on whether the 4-step random access resource configured for the first type terminal or the first feature and the 4-step random access resource configured for the second type terminal or the second feature is used for the EI.

In some embodiments in combination with the above first aspect, in some embodiments, determining, based on the configuration result of the RACH resource, the feature for performing the random access includes at least one of: determining that a 4-step random access resource configured for the first type terminal or a first feature is a resource for the random access, determining that a 4-step random access resource configured for a second type terminal or a second feature is the resource for the random access, and determining that the feature is the first feature; or determining that a 4-step random access resource not configured for the first type terminal or a first feature is a resource for the random access, determining that a 4-step random access resource not configured for a second type terminal or a second feature is the resource for the random access, and determining that the feature includes the first feature and the second feature.

In the above embodiments, whether the first feature is the first feature or the second feature may be determined based on whether the 4-step random access resource configured for the first type terminal and the 4-step random access resource configured for the second type terminal are resources for the random access.

In some embodiments in combination with the above first aspect, in some embodiments, determining, based on the configuration result of the RACH resource, the feature for performing the random access includes at least one of: determining that a random access resource configured for the first type terminal is used for EI, and determining that the feature is a first feature; determining that a random access resource configured for a first feature is used for EI, and determining that the feature is the first feature; determining that a 2-step and/or 4-step random access resource configured for a second type terminal is used for EI, and determining that the feature is a second feature; or determining that a 2-step and/or 4-step random access resource configured for a second feature is used for EI, and determining that the feature is the second feature.

In the above embodiments, it may be determined that the feature is the first feature or the second feature based on that the random access resource configured for the first type terminal or the first feature is used for the EI, or that the 2-step and/or 4-step random access resource configured for the second type terminal or the second feature is used for the EI.

In some embodiments in combination with the above first aspect, in some embodiments, the first type terminal is an enhanced reduced capability (eRedcap) terminal; and the second type terminal is a reduced capability (Redcap) terminal.

According to a second aspect, the embodiments of the present disclosure provide a terminal, including: a processing module, configured to determine, based on a configuration result of an RACH resource, a feature for performing a random access, in which the RACH resource includes at least one of: a 2-step random access resource; or a 4-step random access resource.

In some embodiments in combination with the above second aspect, in some embodiments, the processing module is further configured to: determine, by an RRC layer of the terminal, the feature based on the configuration result.

In some embodiments in combination with the above second aspect, in some embodiments, the terminal further includes: a transceiver module, configured to send, by the RRC layer, first information to a MAC layer of the terminal, in which the first information indicates the feature.

In some embodiments in combination with the above second aspect, in some embodiments, the processing module is further configured to at least one of: determine that a 4-step random access resource configured for a first type terminal or a first feature is a resource for the random access, determine that a 2-step random access resource configured for a second type terminal or a second feature is the resource for the random access, and determine that the feature includes the first feature and the second feature; determine that a 4-step random access resource configured for a first type terminal or a first feature is a resource for the random access, determine that a 2-step random access resource configured for a second type terminal or a second feature is the resource for the random access, and determine that the feature is the second feature; or determine that a 4-step random access resource configured for a first type terminal or a first feature is a resource for the random access, determine that a 2-step random access resource configured for a second type terminal or a second feature is the resource for the random access, and determine that the feature is the first feature or the second feature.

In some embodiments in combination with the above second aspect, in some embodiments, the processing module is further configured to at least one of: determine, based on a measured value of a reference signal, that the feature is the first feature or the second feature; or determine, based on a priority of the first feature and a priority of the second feature, that the feature is the first feature or the second feature.

In some embodiments in combination with the above second aspect, in some embodiments, the processing module is further configured to at least one of: determine that a 4-step random access resource not configured for a first type terminal or a first feature is used for EI, determine that a random access resource configured for a second type terminal or a second feature is used for the EI, and determine that the feature is the second feature; determine that a 4-step random access resource configured for a first type terminal or a first feature is used for EI, determine that a 4-step random access resource configured for a second type terminal or a second feature is used for the EI, and determine that the feature is the first feature; or determine that only a 4-step random access resource configured for a first type terminal or a first feature is used for EI, and determine that the feature is the first feature.

In some embodiments in combination with the above second aspect, in some embodiments, the processing module is further configured to at least one of: determine that a 4-step random access resource configured for a first type terminal or a first feature is a resource for the random access, determine that a 4-step random access resource configured for a second type terminal is the resource for the random access, and determine that the feature is the first feature; or determine that a 4-step random access resource not configured for a first type terminal or a first feature is a resource for the random access, determine that a 4-step random access resource not configured for a second type terminal is the resource for the random access, and determine that the feature includes the first feature and a second feature.

In some embodiments in combination with the above second aspect, in some embodiments, the processing module is further configured to at least one of: determine that a random access resource configured for a first type terminal is used for EI, and determine that the feature is a first feature; determine that a random access resource configured for a first feature is used for EI, and determine that the feature is the first feature; determine that a 2-step and/or 4-step random access resource configured for a second type terminal is used for EI, and determine that the feature is a second feature; or determine that a 2-step and/or 4-step random access resource configured for a second feature is used for EI, and determine that the feature is the second feature.

According to a third aspect, the embodiments of the present disclosure provide a terminal, including: one or more processors, in which the terminal is configured to perform the communication method in the first aspect.

According to a fourth aspect, the embodiments of the present disclosure provide a storage medium for storing instructions that, when executed on a communication device, cause the communication device to perform the method described in the optional implementations of the first aspect.

According to a fifth aspect, the embodiments of the present disclosure provide a program product, when executed by a communication device, causes the communication device to perform the method described in the optional implementations of the first aspect.

According to a sixth aspect, the embodiments of the present disclosure provide a computer program, when executed on a computer, causes the computer to perform the method described in the optional implementations of the first aspect.

According to a seventh aspect, the embodiments of the present disclosure provide a chip or a chip system, including a processing circuit, configured to perform the method described in the optional implementations of the first aspect.

It may be understood that the terminal, the storage medium, the program product, the computer program, the chip or the chip system are all used to perform the methods in the embodiments of the present disclosure. Therefore, for achievable beneficial effects, reference may be made to the beneficial effects in the corresponding method, which are not repeated here.

The embodiments of the present disclosure provide a communication method, a terminal, and a storage medium. In some embodiments, the terms such as communication method, method for processing information, and method for transmitting information may be used interchangeably, and terms such as communication system and system for processing information may be used interchangeably.

The embodiments of the present disclosure are not exhaustive and only serve as illustrations of some embodiments, but not as specific limitations on the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in the embodiments of the present disclosure are for a purpose of describing specific embodiments only and are not intended to limit the present disclosure.

In the embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In the embodiments of the present disclosure, "a plurality of" means two or more.

In some embodiments, the terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the present disclosure, depending on situations, may include at least one of following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "including A", "containing A", "used to indicate A", and "carrying A" may be interpreted as directly carrying A or indirectly indicating A.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device, etc. may be interpreted as physical or virtual, and their names are not limited to the names recorded in the embodiments. In some cases, they may be understood as "equipment", "device", "circuit", "network element", "node", "function", "unit", "section", "system", "network", "chip", "chip system", "entity", "subject", etc.

In some embodiments, the term such as "network" may be interpreted as an apparatus (e.g., an access network device, a core network device, etc.) included in the network.

In some embodiments, "access network device (AN device)" may also be called "radio access network device (RAN device)", "base station (BS)", "radio base station", "fixed station", and in some embodiments may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "terminal" or "terminal device" may be called "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, the acquisition of data, information, etc. may comply with laws and regulations of the country to which the data is obtained.

In some embodiments, data, information, etc. may be obtained with consent from users.

In addition, each element, each row, or each column in the table of the embodiments of the disclosure may be implemented as an independent embodiment, and the combination of any elements, any rows, or any columns may also be implemented as an independent embodiment.

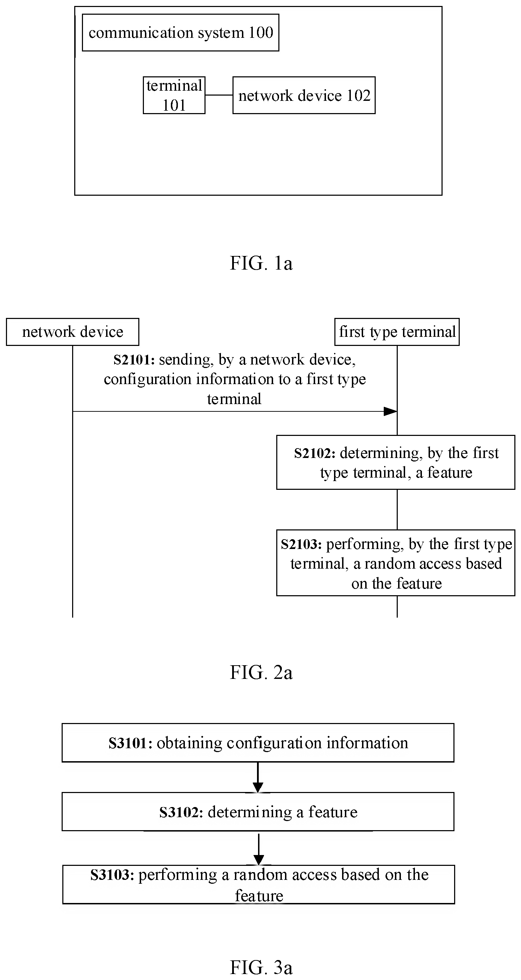

FIG. 1a is a schematic diagram illustrating a structure of a communication system according to an embodiment.

As shown in FIG. 1a, a communication system 100 includes a terminal 101 and a network device 102.

In some embodiments, the network device 102 may include at least one of an access network device or a core network device.

In some embodiments, the terminal 101 includes, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the network device 102 is, for example, a node or device that connects the terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, or an access node in a wireless fidelity (Wi-Fi) system, which is not limited herein.

In some embodiments, the technical solution of the present disclosure may be applied to an architecture of the Open RAN. In this case, an interface between access network devices or within the access network device in the embodiments of the present disclosure may become an internal interface of the Open RAN. Processes and information interaction between these internal interfaces may be implemented via software or programs.

In some embodiments, the access network device may be composed of a central unit (CU) and distributed units (DUs). The CU may also be referred to as a control unit. The use of CU-DU structure allows to divide a protocol layer of the access network device, such that some of the protocol layer functions are placed in the CU for centralized control, and some or all of the remaining protocol layer functions are distributed in the DUs, and the DUs are centrally controlled by the CU, which is not limited herein.

In some embodiments, the core network device may be a device including one or more network elements, or may be a plurality of devices or device groups, each of which includes all or part of the above one or more network elements. The network elements may be virtual or physical. The core network includes, for example, at least one of an evolved packet core (EPC), a 5G core network (5GCN), or a next generation core (NGC).

It may be understood that the communication system described in the embodiments of the disclosure aims to more clearly illustrate the technical solutions of the embodiments of the disclosure, and does not constitute a limitation on the technical solutions provided in the embodiments of the disclosure. A person skilled in the art may know that with the evolution of the system architecture and the emergence of new service scenarios, the technical solution provided in the embodiments of the disclosure are also applicable to similar technical problems.

The following embodiments of the present disclosure may be applied to the communication system 100 shown in FIG. 1a, or to some entities, which is not limited herein. Entities in FIG. 1a are illustrative. The communication system may include all or some of the entities in FIG. 1a, or may include other entities not shown in FIG. 1a. The entities may be in any number and in any form. Connection relationships between the entities are illustrative. The entities may be unconnected or may be connected. They may be connected in any manner, for example, they may be directly connected or indirectly connected, or may be connected via a wired or wireless way.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, a combination of a plurality of systems (e.g., a combination of LTE or LTE-A with 5G) may also be applied.

In some embodiments, the Redcap terminal, similar to the Internet of Things (IoT) device in long term evolution (LTE), generally needs to meet following requirements: 1. low cost and low complexity; 2. a certain degree of coverage enhancement; and 3. power saving. After the introduction of a Redcap user, unlike a normal enhanced mobile broadband (eMBB) user, the Redcap user is in some scenarios, such as the industrial sensor scenario, and is in some wearable devices.

In some embodiments, because the time-frequency domain resource scheduled for the Redcap user may be limited, EI is required, that is, information that may identify the type of the terminal is sent during the random access process to facilitate reasonable scheduling.

In some embodiments, the EI of the terminal is performed by RACH partition. That is, random access resources are divided based on the feature combination to be supported. Therefore, a part of the featureCombinationPreamblesList of the random access resources is allocated to the specific feature combination (in which the feature may be Redcap, etc.). It may be considered that the random access resources may be configured for the part used by the feature combination, and the rest are common RACH resources.

In some embodiments, for the Redcap user, the configuration includes a 2-step RACH resource and a 4-step RACH resource for the EI.

In some embodiments, after the introduction of the eRedcap terminal, the corresponding uplink and downlink data transmission bandwidth is limited to 5 MHz.

In some embodiments, for the 4-step RACH, a separate resource for the EI is configured for the eRedcap user, i.e., a new specific feature combination called eRedcap is added. Thus, if the network configures a separate resource for the EI for the 4-step eRedcap user, it will be preferentially selected; and if the network does not configure it, the R18 eRedcap user may share the 4-step RACH resource of the R17 Redcap user.

In some embodiments, during the random access process of the terminal, the selection of the RACH resource is performed first, i.e., an available RACH resource is selected based on the feature currently applicable for the random access initiated by the terminal.

In some embodiments, the determination of the feature is usually performed by the upper layer or the MAC layer itself, and is used as a basis for the subsequent RACH resource selection based on the priority of the feature.

In some embodiments, generally for the Redcap or eRedcap user: when initiating the random access process, the applicability of the (e)RedCap is also determined by the upper layer. For the eRedcap, in case 2 (4-step random access. In case 2 (4-step physical random access channel (PRACH) eRedCap+2-step PRACH RedCap), the R18 eRedcap UE is allowed to select a 2-step random access. If the R18 eRedcap UE selects the 2-step random access, the R18 eRedcap UE performs the 2-step random access by using the 2-step PRACH RedCap resource. In this case, if it is required to fall back from the 2-step random access to the 4-step random access (in accordance with the relevant specifications), the R18 eRedcap UE initiates the 4-step random access by using the 4-step PRACH RedCap resource.

However, relevant protocols merely specify that if the R18 eRedcap 4-step EI is not configured, the RRC indicates that the Redcap is available; consequently, in case 2, a 2-step random access resource cannot be selected. The embodiments of the present disclosure provide a solution to facilitate the terminal to confirm a currently applicable feature, so as to reasonably select the resource in the subsequent random access process.

FIG. 2a is a flowchart illustrating a communication method according to an embodiment. As shown in FIG. 2a, the embodiments of the present disclosure relate to a communication method, performed by the communication system 100, including the following steps at S2101 to S2103.

At S2101, a network device sends configuration information to a first type terminal.

In some embodiments, the first type terminal receives the configuration information sent by the network device.

In some embodiments, the configuration information is used to determine a configuration result.

In some embodiments, the configuration result indicates at least one of: the RACH resource being configured as a random access resource; or the RACH resource being configured for EI.

In some embodiments, the configuration information indicates: a 4-step random access resource of the first type terminal or a first feature, and a 2-step random access resource of a second type terminal or a second feature, being used as a resource for the random access.

In some embodiments, the configuration information indicates: a 4-step random access resource not configured for the first type terminal or a first feature being used for EI, and a random access resource configured for a second type terminal or a second feature being used for the EI.

In some embodiments, the configuration information indicates: a 4-step random access resource configured for the first type terminal or a first feature being used for EI, and a 4-step random access resource configured for a second type terminal or a second feature being used for the EI.

In some embodiments, the configuration information indicates: only a 4-step random access resource configured for the first type terminal or a first feature being used for EI.

In some embodiments, the configuration information indicates: a 4-step random access resource configured for the first type terminal or a first feature being a resource for the random access, and a 4-step random access resource configured for a second type terminal or a second feature being the resource for the random access.

In some embodiments, the configuration information indicates: a 4-step random access resource configured for the first type terminal or a first feature is not used for the random access, and a 4-step random access resource configured for a second type terminal or a second feature is not used for the random access.

In some embodiments, the configuration information indicates: a random access resource configured for the first type terminal or a second feature being used for EI.

In some embodiments, the configuration information indicates: a 2-step and/or 4-step random access resource configured for a second type terminal or a second feature being used for EI.

In some embodiments, the first feature may be a feature associated with the first type terminal.

In some embodiments, the second feature may be a feature associated with the second type terminal.

In some embodiments, a bandwidth supported by the first type terminal is less than a bandwidth threshold (for example, 5 MHz).

In some embodiments, the bandwidth supported by the first type terminal is less than a bandwidth supported by the second type terminal.

In some embodiments, the first type terminal is an eRedcap terminal, and the second type terminal is a Redcap terminal.

At S2102, the first type terminal determines a feature.

In some embodiments, the first type terminal determines the feature for performing a random access.

In some embodiments, the first type terminal determines, based on a configuration result of a RACH resource, the feature for performing the random access.

In some embodiments, the first type terminal determines, based on configuration results of RACH resources of at least two types of terminals, the feature for performing the random access.

In some embodiments, the feature is a feature associated with at least one type of terminal.

In some embodiments, the feature is a feature associated with at least one type of the at least two types of terminals.

In some embodiments, the feature associated with the first type terminal is a first feature.

In some embodiments, the feature associated with the second type terminal is a second feature.

In some embodiments, the configuration result indicates at least one of: the RACH resource being configured as a random access resource; or the RACH resource being configured for EI.

In some embodiments, the RACH resource includes at least one of: a 2-step random access resource; or a 4-step random access resource.

In some embodiments, based on the configuration result, an RRC layer of the terminal determines the feature.

In some embodiments, the RRC layer sends first information to a MAC layer of the terminal.

In some embodiments, the first information indicates the feature.

In some embodiments, the first type terminal determines that a 4-step random access resource configured for the first type terminal or a first feature is a resource for the random access, determines that a 2-step random access resource configured for a second type terminal or a second feature is the resource for the random access, and determines that the feature includes the first feature associated with the first type terminal and the second feature associated with the second type terminal.

In some embodiments, the first type terminal determines that a 4-step random access resource configured for the first type terminal or a first feature is a resource for the random access, determines that a 2-step random access resource configured for a second type terminal or a second feature is the resource for the random access, and determines that the feature is the second feature.

In some embodiments, the first type terminal determines that a 4-step random access resource configured for the first type terminal or a first feature is a resource for the random access, determines that a 2-step random access resource configured for a second type terminal or a second feature is the resource for the random access, and determines that the feature is the first feature or the second feature.

In some embodiments, the first type terminal determines, based on a measured value of a reference signal, that the feature is the first feature or the second feature.

For example, the RRC layer of the first type terminal determines, based on a reference signal receiving power (RSRP) threshold, whether a feature applicable for triggering a random access process is a first feature (for example, eRedcap) or a second feature (for example, Redcap), and notifies the feature to the MAC layer of the first type terminal. For example, if the signal quality of a synchronization signal and PBCH block (SSB) measured by a current first type terminal is higher than the threshold, the feature is determined to be a Redcap; otherwise, the feature is determined to be an eRedcap.

In some embodiments, the first type terminal determines, based on a priority of the first feature and a priority of the second feature, that the feature is the first feature or the second feature.

In some embodiments, the RRC layer of the first type terminal determines, based on the priority of the feature, whether the feature applicable for triggering the random access process is a Redcap or eRedcap, and notifies the feature to the MAC layer of the first type terminal. For example, if, based on network configuration, the priority of the second feature (for example, Redcap) is higher than the priority of the first feature (for example, eRedcap), the feature is determined to be a Redcap; otherwise, the feature is determined to be an eRedcap.

In some embodiments, the first type terminal determines that a 4-step random access resource not configured for the first type terminal or a first feature is used for EI, determines that a random access resource configured for a second type terminal or a second feature is used for the EI, and determines that the feature is the second feature.

In some embodiments, the first type terminal determines that a 4-step random access resource configured for the first type terminal or a first feature is used for EI, determines that a 4-step random access resource configured for a second type terminal or a second feature is used for the EI, and determines that the feature is the first feature.

In some embodiments, the first type terminal determines that only a 4-step random access resource configured for the first type terminal or a first feature is used for EI, and determines that the feature is the first feature.

In some embodiments, the first type terminal determines that a 4-step random access resource configured for the first type terminal or a first feature is a resource for the random access, determines that a 4-step random access resource configured for a second type terminal or a second feature is the resource for the random access, and determines that the feature is the first feature.

In some embodiments, the first type terminal determines that a 4-step random access resource not configured for the first type terminal or a first feature is a resource for the random access, determines that a 4-step random access resource not configured for a second type terminal or a second feature is the resource for the random access, and determines that the feature includes the first feature and the second feature.

In some embodiments, the first type terminal determines that a random access resource configured for the first type terminal or the first feature is used for EI, and determines that the feature is the first feature.

In some embodiments, the first type terminal determines that a 2-step and/or 4-step random access resource configured for a second type terminal or a second feature is used for EI, and determines that the feature is a second feature.

At S2103, the first type terminal performs a random access based on the feature.

In some embodiments, the term such as "information" may be interchangeable with the terms such as "message", "signal", "signaling", "report", "configuration", "indication", "instruction", "command", "channel", "parameter", "field", and "data".

In some embodiments, the term such as "sending" may be interchangeable with the terms such as "emitting", "reporting", "transmitting", etc.

The communication method involved in the embodiments of the present disclosure may include at least one of S2101 to S2103. For example, S2101 may be implemented as an independent embodiment, S2102 may be implemented as an independent embodiment, and S2103 may be implemented as an independent embodiment. For example, S2101 in combination with S2102 may be implemented as an independent embodiment, and S2102 in combination with S2103 may be implemented as an independent embodiment, which is not limited herein.

FIG. 3a is a flowchart illustrating a communication method according to an embodiment. As shown in FIG. 3a, the embodiments of the present disclosure relate to a communication method, performed by a first type terminal, including the following steps at S3101 to S3103.

At S3101, configuration information is obtained.

In some embodiments, for optional implementations of S3101, reference may be made to the optional implementations of S2101 in FIG. 2a and other related parts in the embodiments involved in FIG. 2a, and details will not be repeated here.

In some embodiments, the first type terminal receives the configuration information sent by a network device, which is not limited herein, and may also receive a configuration signal sent by other entities.

In some embodiments, the first type terminal obtains the configuration information specified by a protocol.

In some embodiments, the first type terminal obtains the configuration information by performs processing.

At S3102, a feature is determined.

In some embodiments, for optional implementations of S3102, reference may be made to the optional implementations of S2102 in FIG. 2a and other related parts in the embodiments involved in FIG. 2a, and details will not be repeated here.

At S3103, a random access is performed based on the feature.

In some embodiments, for optional implementations of S3203, reference may be made to the optional implementations of S2103 in FIG. 2a and other related parts in the embodiments involved in FIG. 2a, and details will not be repeated here.

The communication method involved in the embodiments of the present disclosure may include at least one of S3101 to S3103. For example, S3101 may be implemented as an independent embodiment, S3102 may be implemented as an independent embodiment, and S3103 may be implemented as an independent embodiment. For example, S3101 in combination with S3102 may be implemented as an independent embodiment, and S3102 in combination with S3103 may be implemented as an independent embodiment, which is not limited herein.

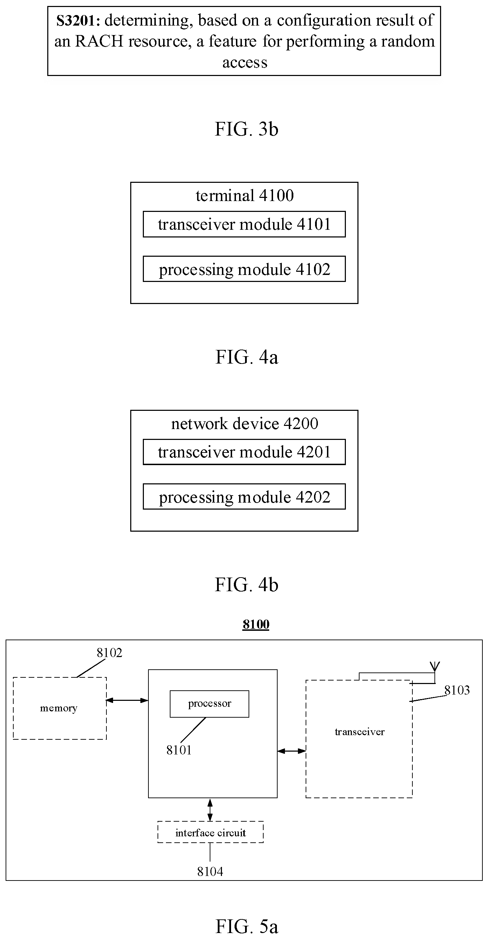

FIG. 3b is a flowchart illustrating a communication method according to the embodiments of the present disclosure. As shown in FIG. 3b, the embodiments of the present disclosure relate to a communication method, performed by a first type terminal, including the following step at S3201.

At S3201, based on a configuration result of a RACH resource, a feature for performing a random access is determined.

In some embodiments, for optional implementations of S3201, reference may be made to the optional implementations of S2102 in FIG. 2a and other related parts in the embodiments involved in FIG. 2a, and details will not be repeated here.

In some embodiments, determining, based on the configuration result of the RACH resource, the feature for performing the random access includes: determining, by an RRC layer of the first type terminal, the feature based on the configuration result.

In some embodiments, the method further includes: sending, by the RRC layer, first information to a MAC layer of the first type terminal, in which the first information indicates the feature.

In some embodiments, determining, based on the configuration result of the RACH resource, the feature for performing the random access includes at least one of: determining that a 4-step random access resource configured for the first type terminal or a first feature is a resource for the random access, determining that a 2-step random access resource configured for a second type terminal or a second feature is the resource for the random access, and determining that the feature includes the first feature and the second feature; determining that a 4-step random access resource configured for the first type terminal or a first feature is a resource for the random access, determining that a 2-step random access resource configured for a second type terminal or a second feature is the resource for the random access, and determining that the feature is the second feature; or determining that a 4-step random access resource configured for the first type terminal or a first feature is a resource for the random access, determining that a 2-step random access resource configured for a second type terminal or a second feature is the resource for the random access, and determining that the feature is the first feature or the second feature.

In some embodiments, determining that the feature is the first feature or the second feature includes at least one of: determining, based on a measured value of a reference signal, that the feature is the first feature or the second feature; or determining, based on a priority of the first feature and a priority of the second feature, that the feature is the first feature or the second feature.

In some embodiments, determining, based on the configuration result of the RACH resource, the feature for performing the random access includes at least one of: determining that a 4-step random access resource not configured for the first type terminal or a first feature is used for EI, determining that a random access resource configured for a second type terminal or a second feature is used for the EI, and determining that the feature is the second feature; determining that a 4-step random access resource configured for the first type terminal or a first feature is used for EI, determining that a 4-step random access resource configured for a second type terminal or a second feature is used for the EI, and determining that the feature is the first feature; or determining that only a 4-step random access resource configured for the first type terminal or a first feature is used for EI, and determining that the feature is the first feature.

In some embodiments, determining, based on the configuration result of the RACH resource, the feature for performing the random access includes at least one of: determining that a 4-step random access resource configured for the first type terminal or a first feature is a resource for the random access, determining that a 4-step random access resource configured for a second type terminal or a second feature is the resource for the random access, and determining that the feature is the first feature; or determining that a 4-step random access resource not configured for the first type terminal or a first feature is a resource for the random access, determining that a 4-step random access resource not configured for a second type terminal or a second feature is the resource for the random access, and determining that the feature includes the first feature and the second feature.

In some embodiments, determining, based on the configuration result of the RACH resource, the feature for performing the random access includes at least one of: determining that a random access resource configured for the first type terminal is used for EI, and determining that the feature is a first feature; determining that a random access resource configured for a first feature is used for EI, and determining that the feature is the first feature; determining that a 2-step and/or 4-step random access resource configured for a second type terminal is used for EI, and determining that the feature is a second feature; or determining that a 2-step and/or 4-step random access resource configured for a second feature is used for EI, and determining that the feature is the second feature.

In some embodiments, the first type terminal is an eRedcap terminal; and the second type terminal is a Redcap terminal.

To better understand the embodiments of the present disclosure, the technical solution of the present disclosure is further described below via embodiments.

In some embodiments, the present disclosure provides a method for a specific type of terminal (corresponding to a first type terminal) to select a resource during the random access process.

In some embodiments, the first type terminal is an eRedcap terminal of version 18 (R18, Release) , which differs from the R17 Redcap (corresponding to the second type terminal) and the third type terminal (for example, a general terminal or an eMBB terminal)).

In some embodiments, the first type terminal has a smaller baseband processing bandwidth compared to the second type terminal and the third type terminal.

In some embodiments, the first feature is a feature associated with the first type terminal, for example, the eRedcap.

In some embodiments, the second feature is a feature associated with the second type terminal, for example, the Redcap.

In some embodiments, for the first type terminal, the RRC layer indicates to the MAC layer a feature applicable for triggering the random access process.

In some embodiments, the RRC layer determines, based on the RACH resource configuration situation, the feature applicable for triggering the random access process, and notifies the MAC layer.

In some embodiments, for the first type terminal, if the network device configures an R18 eRedcap 4-step resource and an R17 Redcap 2-step resource for the random access resource (case 1), the RRC layer indicates to the MAC layer that the Redcap and eRedcap are available as the feature applicable for triggering the random access process.

In some embodiments, for the first type terminal, if the network device configures an R18 eRedcap 4-step resource and an R17 Redcap 2-step resource for the random access resource (case 1, and it is also possible that an R17 Redcap 4-step resource is configured for the random access resource in this case), the RRC layer indicates to the MAC layer that the Redcap is available as the feature applicable for triggering the random access process.

In some embodiments, for the first type terminal, if the network device configures an R18 eRedcap 4-step resource and an R17 Redcap 2-step resource for the random access resource (case 1), the RRC layer indicates to the MAC layer that the Redcap or the eRedcap is available as the feature applicable for triggering the random access process.

In some embodiments, the RRC layer determines, based on an RSRP threshold or the priority of the feature, whether the Redcap or the eRedcap is available as the feature applicable for triggering the random access process, and notifies the MAC layer.

In some embodiments, the RRC layer determines, based on the RSRP threshold, whether the Redcap or the eRedcap is available as the feature applicable for triggering the random access process, and notifies the MAC layer. For example, if the signal quality of an SSB measured by a current first type terminal is higher than the threshold, the Redcap is selected as available; otherwise, the eRedcap is selected as available.

In some embodiments, the RRC layer determines, based on the priority of the feature, whether the Redcap or the eRedcap is available as the feature applicable for triggering the random access process, and notifies the MAC layer. For example, if the priority of the feature of the Redcap configured by the network device is higher than the priority of the feature of the eRedcap, the Redcap is selected as available; otherwise, the eRedcap is selected as available.

In some embodiments, for the first type terminal, in cases other than case 1 where the network device configures the R18 eRedcap 4-step resource and the R17 Redcap 2-step resource for the random access resource, the RRC layer indicates to the MAC layer that the feature applicable for triggering the random access process is that the Redcap or the eRedcap is available.

For example, if no R18 eRedcap 4-step resource is configured for EI, the RRC layer indicates to the MAC layer that the Redcap is available.

For example, if the R18 eRedcap 4-step resource is configured for the EI and an R17 Redcap 4-step resource is configured for the EI, the RRC layer indicates to the MAC layer that the eRedcap is available.

For example, if only the R18 eRedcap 4-step resource is configured for the EI, the RRC layer indicates to the MAC layer that the eRedcap is available.

In some embodiments, for the first type terminal, if the network device configures the R18 eRedcap 4-step resource and the R17 Redcap 4-step resource for the random access resource, the RRC layer indicates to the MAC layer that the feature applicable for triggering the random access process is the eRedcap; in all other cases, the RRC layer indicates to the MAC layer that the feature is that both the Redcap and the eRedcap are available. That is, except when the R18 eRedcap 4-step resource and the R17 Redcap 4-step resource are configured for the random access resource, in which case the RRC layer indicates that the eRedcap is available, in other cases, it may indicate that both features are available. For example, other scenarios may include at least one of: for example, if no R18 eRedcap 4-step resource is configured for the EI, the RRC layer indicates to the MAC layer that both features are available; for example, if the R18 eRedcap 4-step resource is configured for the EI and the R17 Redcap 2-step resource is configured for the EI, the RRC layer indicates to the MAC layer that both features are available; or for example, if only the R18 eRedcap 4-step resource is configured for the EI, the RRC layer indicates to the MAC layer that both features are available.

In some embodiments, the first type terminal performs separate determinations, and the RRC layer performs at least one of: if the R18 eRedcap resource is configured for the EI, the RRC layer indicates to the MAC layer that the eRedcap is available; if the R17 Redcap resource is configured for the EI (at least one of a 2-step or 4-step configuration), the RRC layer indicates to the MAC layer that the Redcap is available; or, if the R17 Redcap resource is configured for an EI 2-step random access (RA), the RRC layer indicates to the MAC layer that the Redcap is available; or, if the R17 Redcap resource is configured for an EI 4-step RA, the RRC layer indicates to the MAC layer that the Redcap is available or does not indicate (for example, if the R18 eRedcap resource is configured for the EI, it does not indicate; otherwise, it indicates).

In some embodiments, if R18 eRedcap resource is not configured for the EI, the RRC layer indicates that the Redcap is available; otherwise, if the R18 eRedcap resource is configured for the EI and the R17 Redcap 2-step resource is configured for the EI (In some embodiments, an R17 Redcap 4-step resource is configured for the EI), manner 1: the RRC layer indicates that the Redcap and the eRedcap are available or indicates that the Redcap is available; or manner 2: if the RRC layer performs a pre-determination based on an RSRP or the priority, the RRC layer indicates the Redcap or indicates that the Redcap is available; if the R18 eRedcap resource is configured for the EI and the R17 Redcap 4-step resource is configured for the EI, the RRC layer indicates that the eRedcap is available; and if the R18 eRedcap resource is configured for the EI, the RRC layer indicates that the eRedcap is available.

In some embodiments, if R18 eRedcap resource is not configured for EI, the RRC layer indicates that the Redcap is available; otherwise, if the R18 eRedcap resource is configured for the EI and the R17 Redcap 2-step resource is configured for the EI (In some embodiments, the R17 Redcap 4-step resource is configured for the EI), the RRC layer indicates that the Redcap and the eRedcap are available, or indicates that the Redcap is available; in other cases, the RRC layer indicates that the eRedcap is available.

The embodiments of the present disclosure also provide an apparatus for implementing any one of the above methods. For example, an apparatus is provided, including units or modules for implementing the steps performed by the terminal in any one of the above methods. For another example, another apparatus is provided, including units or modules for implementing the steps performed by the network device (for example, an access network device, a core network function node, a core network device, etc.) in any one of the above methods.

It should be understood that the division of units or modules in the above apparatuses is merely a division of logical functions. In actual implementations, the units or modules may be fully or partially integrated into a single physical entity or may be physically separated. In addition, the units or modules in the apparatus may be implemented in a form of a processor invoking software. For example, the apparatus includes a processor, which is connected to a memory for storing instructions. The processor invokes the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in a form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units or modules are realized by designing logical relationships among components in the circuit. For another example, in another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in a form of the processor invoking software, or fully implemented in a form of the hardware circuit, or partially implemented in a form of the processor invoking software and the remaining part implemented in a form of the hardware circuit.

In the embodiments of the present disclosure, the processor is a circuit with a signal processing capability. In an implementation, the processor may be a circuit configured to read and execute instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or modules. In addition, the hardware circuit may be designed specifically for artificial intelligence and may be understood as an ASIC, such as a neural network processing unit (NPU), a tensor processing unit (TPU), or a deep learning processing unit (DPU).

FIG. 4a is a block diagram illustrating a terminal 4100 according to the embodiments of the present disclosure. As shown in FIG. 4a, the terminal 4100 may include at least one of: a transceiver module 4101 or a processing module 4102. In some embodiments, the transceiver module 4101 is configured to receive configuration information. In some embodiments, the transceiver module 4101 is configured to perform at least one of the communication steps such as sending and/or receiving performed by the terminal 101 in any one of the above methods, and details will not be repeated here. In some embodiments, the processing module 4102 is configured to perform at least one of the other steps performed by the terminal 101 in any one of the above methods, and details will not be repeated here.

In some embodiments, the terminal includes: a processing module 4102, configured to determine, based on a configuration result of an RACH resource, a feature for performing a random access, in which the feature is a feature associated with at least one type of terminal; and the RACH resource includes at least one of: a 2-step random access resource; or a 4-step random access resource.

In some embodiments, the processing module 4102 is further configured to: determine, by an RRC layer of the terminal, the feature based on the configuration result.

In some embodiments, the terminal further includes: a transceiver module 4101, configured to send, by the RRC layer, first information to an MAC layer of the terminal, in which the first information indicates the feature.

In some embodiments, the processing module 4102 is further configured to at least one of: determine that a 4-step random access resource configured for a first type terminal is a resource for the random access, determine that a 2-step random access resource configured for a second type terminal is the resource for the random access, and determine that the feature includes the first feature associated with the first type terminal and the second feature associated with the second type terminal; determine that a 4-step random access resource configured for a first type terminal is a resource for the random access, determine that a 2-step random access resource configured for a second type terminal is the resource for the random access, and determine that the feature is the second feature; or determine that a 4-step random access resource configured for a first type terminal is a resource for the random access, determine that a 2-step random access resource configured for a second type terminal is the resource for the random access, and determine that the feature is the first feature or the second feature.

In some embodiments, the processing module 4102 is further configured to at least one of: determine, based on a measured value of a reference signal, that the feature is the first feature or the second feature; or determine, based on a priority of the first feature and a priority of the second feature, that the feature is the first feature or the second feature.

In some embodiments, the processing module 4102 is further configured to at least one of: determine that a 4-step random access resource not configured for a first type terminal or a first feature is used for EI, determine that a random access resource configured for a second type terminal or a second feature is used for the EI, and determine that the feature is the second feature; determine that a 4-step random access resource configured for a first type terminal is used for EI, determine that a 4-step random access resource configured for a second type terminal is used for the EI, and determine that the feature is the first feature; or determine that only a 4-step random access resource configured for a first type terminal is used for EI, and determine that the feature is the first feature.

In some embodiments, the processing module is further configured to at least one of: determine that a 4-step random access resource configured for a first type terminal is a resource for the random access, determine that a 4-step random access resource configured for a second type terminal is the resource for the random access, and determine that the feature is the first feature; or determine that a 4-step random access resource configured for a first type terminal is not used for the resource for the random access, determine that a 4-step random access resource configured for a second type terminal is not used for the resource for the random access, and determine that the feature includes the first feature and a second feature.

In some embodiments, the processing module 4102 is further configured to at least one of: determine that a random access resource configured for a first type terminal is used for EI, and determine that the feature is a first feature; or determine that a 2-step and/or 4-step random access resource configured for a second type terminal is used for EI, and determine that the feature is a second feature.

FIG. 4b is a block diagram illustrating a network device 4200 according to the embodiments of the present disclosure. As shown in FIG. 4b, the network device 4200 may include at least one of: a transceiver module 4201 or a processing module 4202. In some embodiments, the transceiver module is configured to send configuration information. In some embodiments, the transceiver module is configured to perform at least one of the communication steps such as sending and/or receiving performed by the network device 102 in any one of the above methods, and details will not be repeated here. In some embodiments, the transceiver module 4201 may include a sending module and/or a receiving module, and the sending module and the receiving module may be separate or integrated together. In some embodiments, the transceiver module 4201 may be interchangeable with a transceiver. In some embodiments, the processing module 4202 is configured to perform at least one of the other steps performed by the network device 102 in any one of the above methods, and details will not be repeated here.

In some embodiments, the processing module may be a module or may include a plurality of sub-modules. In some embodiments, the plurality of sub-modules perform all or part of the steps required to be performed by the processing module. In some embodiments, the processing module may be interchangeable with a processor.

FIG. 5a is a block diagram illustrating a communication device 8100 according to the embodiments of the present disclosure. The communication device 8100 may be a network device (for example, an access network device, a core network device, etc.), or a terminal (for example, a user equipment, etc.), or a chip, chip system, or processor that supports the network device to implement any one of the above methods, or a chip, chip system, or processor that supports the terminal to implement any one of the above methods. The communication device 8100 may be used to implement the methods described in the above method embodiments, and details may be referred to the description in the above method embodiments.

As shown in FIG. 5a, the communication device 8100 includes one or more processors 8101. The processor 8101 may be a general-purpose processor or a special-purpose processor. For example, it may be a baseband processor or a central processor. The baseband processor is configured to process communication protocols and communication data, and the central processor is configured to control communication devices (such as base stations, baseband chips, terminals, terminal chips, DU or CU, etc.) to execute computer programs and process computer program data. The communication device 8100 is configured to perform any one of the above methods.

In some embodiments, the communication device 8100 further includes one or more memories 8102 for storing instructions. In some embodiments, all or some of the one or more memories 8102 may also be located outside the communication device 8100.

In some embodiments, the communication device 8100 further includes one or more transceivers 8103. When the communication device 8100 includes one or more transceivers 8103, the transceiver 8103 performs at least one of the communication steps such as sending and/or receiving in the above methods, and the processor 8101 performs at least one of the other steps.

In some embodiments, the transceiver may include a receiver and/or a transmitter, which may be separate or integrated. In some embodiments, the terms such as transceiver, transceiver unit, transceiver machine, transceiver circuit, etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

In some embodiments, the communication device 8100 may include one or more interface circuits 8104. In some embodiments, the interface circuit 8104 is connected to the memory 8102, and the interface circuit 8104 may be used to receive signals from the memory 8102 or other devices, and may be used to send the signals to the memory 8102 or other devices. For example, the interface circuit 8104 may read instructions stored in the memory 8102 and send the instructions to the processor 8101.

The communication device 8100 described in the above embodiments may be a network device or a terminal, but the scope of the communication device 8100 described in the present disclosure is not limited herein, and the structure of the communication device 8100 may not be limited by FIG. 5a. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

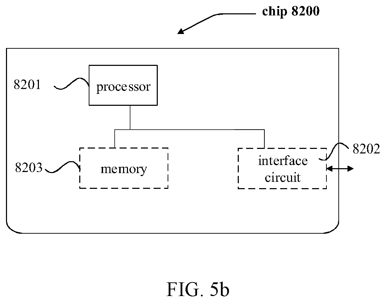

FIG. 5b is a block diagram illustrating a chip 8200 according to the embodiments of the present disclosure. For the case where the communication device 8100 may be a chip or a chip system, reference may be made to the block diagram of the chip 8200 shown in FIG. 5b, which is not limited herein.

The chip 8200 includes one or more processors 8201, and the chip 8200 is configured to perform any one of the above methods.

In some embodiments, the chip 8200 further includes one or more interface circuits 8202. In some embodiments, the interface circuit 8202 is connected to a memory 8203, and the interface circuit 8202 may be used to receive signals from the memory 8203 or other devices, and the interface circuit 8202 may be used to send the signals to the memory 8203 or other devices. For example, the interface circuit 8202 may read instructions stored in the memory 8203 and send the instructions to the processor 8201.

In some embodiments, the interface circuit 8202 performs at least one of the communication steps such as sending and/or receiving in the above methods (for example, S2101 or S3101, which is not limited herein), and the processor 8201 performs at least one of the other steps (for example, S2101 or S2102, which is not limited herein).

In some embodiments, the terms such as interface circuit, interface, transceiver pin, transceiver, etc. may be used interchangeably.

In some embodiments, the chip 8200 further includes one or more memories 8203 for storing instructions. In some embodiments, all or some of the one or more memories 8203 may be located outside the chip 8200.

The present disclosure also provides a storage medium for storing instructions. When the instructions are executed on the communication device 8100, the communication device 8100 is caused to perform any one of the above methods. In some embodiments, the storage medium is an electronic storage medium. In some embodiments, the storage medium is a computer-readable storage medium, which is not limited herein, and may also be a storage medium readable by other devices. In some embodiments, the storage medium may be a non-transitory storage medium, which is not limited herein, and may also be a transitory storage medium.

The present disclosure also provides a program product, when executed by the communication device 8100, causes the communication device 8100 to perform any one of the above methods. In some embodiments, the program product is a computer program product.

The present disclosure also provides a computer program, when executed on a computer, causes the computer to perform any one of the above methods.

## Claims

1. A communication method, performed by a first type terminal, comprising:
determining, based on a configuration result of a random access channel (RACH) resource, a feature for performing a random access,
wherein the RACH resource comprises at least one of: a 2-step random access resource; or a 4-step random access resource.

2. The method of claim 1, wherein determining, based on the configuration result of the RACH resource, the feature for performing the random access comprises:
determining, by a radio resource control (RRC) layer of the first type terminal, the feature based on the configuration result.

3. The method of claim 2, further comprising:
sending, by the RRC layer, first information to a medium access control (MAC) layer of the first type terminal,
wherein the first information indicates the feature.

4. The method of claim 3, wherein determining, based on the configuration result of the RACH resource, the feature for performing the random access comprises at least one of:
determining that a 4-step random access resource configured for the first type terminal or a first feature is a resource for the random access, determining that a 2-step random access resource configured for a second type terminal or a second feature is the resource for the random access, and determining that the feature comprises the first feature and the second feature;
determining that a 4-step random access resource configured for the first type terminal or a first feature is a resource for the random access, determining that a 2-step random access resource configured for a second type terminal or a second feature is the resource for the random access, and determining that the feature is the second feature; or
determining that a 4-step random access resource configured for the first type terminal or a first feature is a resource for the random access, determining that a 2-step random access resource configured for a second type terminal or a second feature is the resource for the random access, and determining that the feature is the first feature or the second feature.

5. The method of claim 4, wherein determining that the feature is the first feature or the second feature comprises at least one of:
determining, based on a measured value of a reference signal, that the feature is the first feature or the second feature; or
determining, based on a priority of the first feature and a priority of the second feature, that the feature is the first feature or the second feature.

6. The method of claim 3, wherein determining, based on the configuration result of the RACH resource, the feature for performing the random access comprises at least one of:
determining that a 4-step random access resource not configured for the first type terminal or a first feature is used for early indication (EI), determining that a random access resource configured for a second type terminal or a second feature is used for the EI, and determining that the feature is the second feature;
determining that a 4-step random access resource configured for the first type terminal or a first feature is used for EI, determining that a 4-step random access resource configured for a second type terminal or a second feature is used for the EI, and determining that the feature is the first feature; or
determining that only a 4-step random access resource configured for the first type terminal or a first feature is used for EI, and determining that the feature is the first feature.

7. The method of claim 3, wherein determining, based on the configuration result of the RACH resource, the feature for performing the random access comprises at least one of:
determining that a 4-step random access resource configured for the first type terminal or a first feature is a resource for the random access, determining that a 4-step random access resource configured for a second type terminal or a second feature is the resource for the random access, and determining that the feature is the first feature; or
determining that a 4-step random access resource not configured for the first type terminal or a first feature is a resource for the random access, determining that a 4-step random access resource not configured for a second type terminal or a second feature is the resource for the random access, and determining that the feature comprises the first feature and the second feature.

8. The method of claim 3, wherein determining, based on the configuration result of the RACH resource, the feature for performing the random access comprises at least one of:
determining that a random access resource configured for the first type terminal is used for EI, and determining that the feature is a first feature;
determining that a random access resource configured for a first feature is used for EI, and determining that the feature is the first feature;
determining that a 2-step and/or 4-step random access resource configured for a second type terminal is used for EI, and determining that the feature is a second feature; or
determining that a 2-step and/or 4-step random access resource configured for a second feature is used for EI, and determining that the feature is the second feature.

9. The method of any one of claims 3 to 8, wherein the first type terminal is an enhanced reduced capability (eRedcap) terminal; and the second type terminal is a reduced capability (Redcap) terminal.

10. A terminal, comprising:
a processing module, configured to determine, based on a configuration result of a random access channel (RACH) resource, a feature for performing a random access,
wherein the RACH resource comprises at least one of: a 2-step random access resource; or a 4-step random access resource.

11. The terminal of claim 10, wherein the processing module is further configured to:
determine, by a radio resource control (RRC) layer of the terminal, the feature based on the configuration result.

12. The terminal of claim 11, further comprising:
a transceiver module, configured to send, by the RRC layer, first information to a medium access control (MAC) layer of the terminal,
wherein the first information indicates the feature.

13. The terminal of claim 12, wherein the processing module is further configured to at least one of:
determine that a 4-step random access resource configured for a first type terminal or a first feature is a resource for the random access, determine that a 2-step random access resource configured for a second type terminal or a second feature is the resource for the random access, and determine that the feature comprises the first feature and the second feature;
determine that a 4-step random access resource configured for a first type terminal or a first feature is a resource for the random access, determine that a 2-step random access resource configured for a second type terminal or a second feature is the resource for the random access, and determine that the feature is the second feature; or
determine that a 4-step random access resource configured for a first type terminal or a first feature is a resource for the random access, determine that a 2-step random access resource configured for a second type terminal or a second feature is the resource for the random access, and determine that the feature is the first feature or the second feature.

14. The terminal of claim 13, wherein the processing module is further configured to at least one of:
determine, based on a measured value of a reference signal, that the feature is the first feature or the second feature; or
determine, based on a priority of the first feature and a priority of the second feature, that the feature is the first feature or the second feature.

15. The terminal of claim 12, wherein the processing module is further configured to at least one of:
determine that a 4-step random access resource not configured for a first type terminal or a first feature is used for early indication (EI), determine that a random access resource configured for a second type terminal or a second feature is used for the EI, and determine that the feature is the second feature;
determine that a 4-step random access resource configured for a first type terminal or a first feature is used for EI, determine that a 4-step random access resource configured for a second type terminal or a second feature is used for the EI, and determine that the feature is the first feature; or
determine that only a 4-step random access resource configured for a first type terminal or a first feature is used for EI, and determine that the feature is the first feature.

16. The terminal of claim 12, wherein the processing module is further configured to at least one of:
determine that a 4-step random access resource configured for a first type terminal or a first feature is a resource for the random access, determine that a 4-step random access resource configured for a second type terminal is the resource for the random access, and determine that the feature is the first feature; or
determine that a 4-step random access resource not configured for a first type terminal or a first feature is a resource for the random access, determine that a 4-step random access resource not configured for a second type terminal is the resource for the random access, and determine that the feature comprises the first feature and a second feature.

17. The terminal of claim 12, wherein the processing module is further configured to at least one of:
determine that a random access resource configured for a first type terminal is used for EI, and determine that the feature is a first feature;
determine that a random access resource configured for a first feature is used for EI, and determine that the feature is the first feature;
determine that a 2-step and/or 4-step random access resource configured for a second type terminal is used for EI, and determine that the feature is a second feature; or
determine that a 2-step and/or 4-step random access resource configured for a second feature is used for EI, and determine that the feature is the second feature.

18. A terminal, comprising:
a memory comprising executable instructions;
one or more processors,
wherein the executable instructions, when executed by the one or more processors, cause the terminal to perform the communication method of any one of claims 1 to 9.

19. A storage medium for storing instructions that, when executed on a communication device, cause the communication device to perform the communication method of any one of claims 1 to 9.
